# EUROPEAN PATENT APPLICATION

(11) **EP 4 601 046 A1**
(43) Date of publication of application: **13.08.2025**
(21) Application number: 23927985.4
(22) Date of filing: 21.03.2023
(51) Int. Cl.: H01M 4/62, H01M 10/0525

(54) **POSITIVE ELECTRODE SHEET AND PREPARATION METHOD THEREFOR, BATTERY CELL, BATTERY, AND ELECTRIC DEVICE**

(71) Applicant: Contemporary Amperex Technology (Hong Kong) Limited, Central (HK)
(72) Inventor: CHEN, Xiangbin, Ningde, Fujian 352100 (CN); SHI, Songjun, Ningde, Fujian 352100 (CN); LAI, Youlei, Ningde, Fujian 352100 (CN); YU, Honggang, Ningde, Fujian 352100 (CN); JIN, Haizu, Ningde, Fujian 352100 (CN); LI, Jingru, Ningde, Fujian 352100 (CN); ZHAO, Zimeng, Ningde, Fujian 352100 (CN); XING, Ke, Ningde, Fujian 352100 (CN)
(74) Representative: Herrmann, Uwe
(86) International application number: PCT/CN2023/082775
(87) International publication number: WO 2024/192669

(57) **Abstract**

Embodiments of this application provide a positive electrode plate and a preparation method therefor, a battery cell, a battery, and an electric device. The positive electrode plate includes: an active material layer, where the active material layer includes a first active material, a conductive agent, and a binder. The first active material includes a layered transition metal oxide, and the binder includes a flexible binder, configured to bind the first active material and the conductive agent. Performance of a battery including the positive electrode plate is improved.

## Description

### TECHNICAL FIELD

This application relates to the field of battery technologies, and in particular, to a positive electrode plate and a preparation method therefor, a battery cell, a battery, and an electric device.

### BACKGROUND

In recent years, as lithium-ion batteries are increasingly widely used, the lithium-ion batteries have been widely used in energy storage power systems such as hydroelectric power plants, thermal power plants, wind power plants, and solar power plants, and various fields such as electric tools, electric bicycles, electric motorcycles, electric vehicles, military equipment, and aerospace.

A positive electrode plate serves as a component of a battery, and performance of the positive electrode plate is crucial to performance of the battery. Therefore, how to provide a positive electrode plate to improve performance of a battery is a technical problem that needs to be resolved urgently.

### SUMMARY

Embodiments of this application provide a positive electrode plate and a preparation method therefor, a battery cell, a battery, and an electric device, to improve performance of a battery.

According to a first aspect, a positive electrode plate is provided, including: an active material layer, where the active material layer includes a first active material, a conductive agent, and a binder. The first active material includes a layered transition metal oxide, and the binder includes a flexible binder, configured to bind the first active material and the conductive agent.

An embodiment of this application provides a positive electrode plate. The positive electrode plate includes an active material layer, and the active material layer includes a first active material, a conductive agent, and a binder. Specifically, the first active material includes a layered transition metal oxide, and the binder includes a flexible binder, configured to bind the first active material and the conductive agent. When the layered transition metal oxide serves as a positive electrode active material, during use of a battery, a volume of the layered transition metal oxide greatly shrinks, resulting in an enlarged gap between the layered transition metal oxide and the binder. The layered transition metal oxide tears the binder. As a result, the binder is separated from the first active material and/or the conductive agent, and an electrical connection between the first active material and the conductive agent is lost due to a binding failure of the binder. In the technical solution of this embodiment of this application, the flexible binder is provided, configured to bind the layered transition metal oxide and the conductive agent. The flexible binder has good stretchability. When the volume of the layered transition metal oxide shrinks and the layered transition metal oxide tears the binder, the flexible binder deforms, to adapt to the volume shrinking of the layered transition metal oxide and maintain an electrical connection between the layered transition metal oxide and the conductive agent, so that an impact of a failure of the electrical connection between the first active material and the conductive agent on performance of the battery is reduced. Therefore, the technical solution of this embodiment of this application can improve the performance of the battery.

In a possible implementation, the flexible binder includes at least one of a polyethylene-based binder, a polyisocyanate-based binder, and a polypropylene-based binder.

In a possible implementation, the flexible binder includes at least one of polyvinylpyrrolidone-polyethyleneimine (PVP-PEI) and poly(N-methacryloyl-3,4-dihydroxyL-phenylalanine) (PMDOPA).

A -NH₂ group and a C=O group in PVP-PEI form a dynamic hydrogen bond network, so that PVP-PEI has a good self-healing property and a certain degree of stretchability. The PMDOPA includes abundant O-diphenol functional groups, so that PMDOPA has a good binding property and better flexibility. During use of the battery, the volume of the layered transition metal oxide shrinks, and the layered transition metal oxide tears the binder. However, due to the good self-healing property and the certain degree of stretchability of PVP-PEI and the good binding property and the better flexibility of PMDOPA, a problem of a poor connection between the first active material and the conductive agent that is caused by the shrinking of the volume of the layered transition metal oxide can be avoided.

In a possible implementation, the first active material includes at least one of a ternary material and a quaternary material.

In a possible implementation, the first active material includes Li₁₊ₐNiₓCo_{y}M_{1-x-y}O_{2+b}. M includes at least one of Mn, Zr, Al, B, Ta, Mo, W, Nb, Sb, and La, 0.5≤x<1.0, 0≤y<0.5, x+y<1, -0.5≤a≤0.5, and -0.02<b<0.02.

In a possible implementation, the first active material includes lithium nickel cobalt manganate.

The lithium nickel cobalt manganate has advantages such as good cycle performance (having excellent cycle stability at both a normal temperature and a high temperature), a high energy density, a high voltage plateau, good thermal stability, a long cycle life, an ideal crystal structure, small self-discharging, and no memory effect. Therefore, when the lithium nickel cobalt manganate is used as the positive electrode active material, the performance of the battery can be improved.

In a possible implementation, the conductive agent includes a linear conductive agent, and the linear conductive agent includes at least one of carbon nanotubes and graphene.

The linear conductive agent has good electrical conductivity performance, can reduce a contact resistance of an electrode and increase a movement rate of electrons, and can also effectively increase a migration rate of lithium ions in an electrode material and improve electronic conductivity of an electrode plate, thereby improving charging and discharging efficiency of the electrode. For example, in the carbon nanotubes and the graphene, SP² hybridization is performed on carbon atoms, so that the carbon nanotubes and the graphene have a high modulus and high strength. In addition, the carbon nanotubes have good flexibility, stretchability, and electrical conductivity performance, and the graphene has high tensile strength, good ductility, and electrical conductivity performance. As the conductive agent, the carbon nanotubes and/or the graphene can greatly improve electrical conductivity performance of the battery.

In a possible implementation, the positive electrode material further includes a second active material. The second active material includes an olivine-structure phosphate material, and optionally, the second active material includes Li_{1+c}Fe_{d}M'_{1-d}P₁₋ₘO₄₋ₙ. M' includes at least one of Mn, Al, Cu, Mg, Zn, Ni, Ti, V, Zr, Co, Ga, Sn, Sb, Nb, and Ge, - 0.2≤c≤0.2, 0.3≤d≤1, 0≤m≤0.1, and 0≤n≤0.1.

In a possible implementation, the second active material includes at least one of lithium iron phosphate and lithium manganese iron phosphate.

The olivine structure is a crystal structure of a material. The material having the olivine structure has high stability. When the olivine structure is used in a battery cell, a risk that the battery cell catches fire or explodes under a condition such as a high temperature can be reduced, to help improve reliability of the battery cell. A composite active material is used as the positive electrode material, and the layered transition metal oxide and the phosphate material are mixed, so that the battery has advantages of both the layered transition metal oxide and the phosphate material, thereby further improving the performance of the battery. For example, the second active material includes lithium iron phosphate. The lithium iron phosphate has advantages such as a high energy density, high safety, and a long cycle life, and can improve cycle performance and an energy density of the battery.

In a possible implementation, a mass ratio of the first active material to the second active material ranges from 0.1:1 to 9: 1.

The mass ratio of the first active material to the second active material is set within an appropriate range, so that the battery has advantages of both the layered transition metal oxide and the phosphate material, to improve the performance of the battery.

In a possible implementation, based on a total weight of the active material layer, a ratio of a weight of the conductive agent to the weight of the active material layer ranges from 0.4% to 3%.

When the ratio of the conductive agent in the active material layer is excessively low, a quantity of electron conduction channels is small, and an effective conduction effect cannot be achieved, which is not conductive to charging and discharging with a large current. When the ratio of the conductive agent in the active material layer is excessively high, a ratio of the active material in the active material layer is reduced, resulting in a decrease in a capacity of the battery. When a content of the conductive agent in the active material layer is proper, the battery can have a high discharging capacity and good cycle performance.

According to a second aspect, a preparation method for a positive electrode plate is provided. The method includes: providing an active material layer, where the active material layer includes a first active material, a conductive agent, and a binder. The first active material includes a layered transition metal oxide, and the binder includes a flexible binder, configured to bind the first active material and the conductive agent.

According to a third aspect, a battery cell is provided, including the positive electrode plate in any one of the first aspect and any possible implementations thereof.

According to a fourth aspect, a battery is provided, including the battery cell in the third aspect.

According to a fifth aspect, an electric device is provided, including the battery in the fourth aspect.

In the embodiments of this application, the provided positive electrode plate includes the active material layer, where the active material layer includes the first active material, the conductive agent, and the binder. Specifically, the first active material includes the layered transition metal oxide, and the binder includes the flexible binder, configured to bind the first active material and the conductive agent. When the layered transition metal oxide serves as a positive electrode active material, during use of a battery, a volume of the layered transition metal oxide greatly shrinks, resulting in an enlarged gap between the layered transition metal oxide and the binder. The layered transition metal oxide tears the binder. As a result, the binder is separated from the first active material and/or the conductive agent, and an electrical connection between the first active material and the conductive agent is lost due to a binding failure of the binder. In the technical solution of this embodiment of this application, the flexible binder is provided, configured to bind the layered transition metal oxide and the conductive agent. The flexible binder has good stretchability. When the volume of the layered transition metal oxide shrinks and the layered transition metal oxide tears the binder, the flexible binder deforms, to adapt to the volume shrinking of the layered transition metal oxide and maintain an electrical connection between the layered transition metal oxide and the conductive agent, so that an impact of a failure of the electrical connection between the first active material and the conductive agent on performance of the battery is reduced. Therefore, the technical solution of this embodiment of this application can improve the performance of the battery.

### BRIEF DESCRIPTION OF THE DRAWINGS

To provide a clearer explanation of the technical solutions of embodiments of this application, a brief introduction will be given to the accompanying drawings required in the embodiments of this application. It is clear that the accompanying drawings described below are only some embodiments of this application. For ordinary technical personnel in the art, other accompanying drawings can be obtained based on the accompanying drawings without any creative effort.

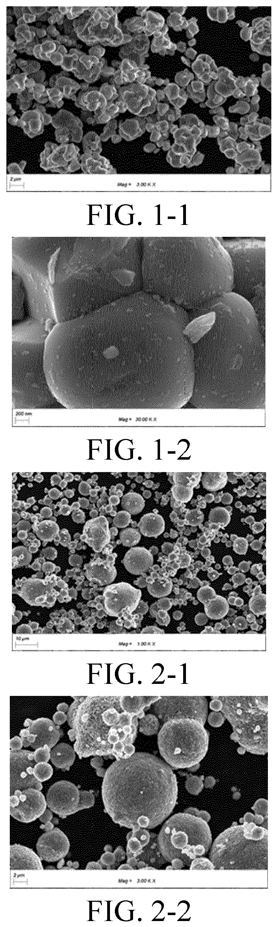

FIG. 1-1 is a picture of lithium nickel cobalt manganate (NCM622) from a scanning electron microscope according to an embodiment of this application;
FIG. 1-2 is a picture of lithium nickel cobalt manganate (NCM622) from a scanning electron microscope according to an embodiment of this application;
FIG. 2-1 is a picture of lithium iron phosphate (LFP) from a scanning electron microscope according to an embodiment of this application;
FIG. 2-2 is a picture of lithium iron phosphate (LFP) from a scanning electron microscope according to an embodiment of this application;
FIG. 3-1 is a picture of lithium manganese iron phosphate (LFMP) from a scanning electron microscope according to an embodiment of this application;
FIG. 3-2 is a picture of lithium manganese iron phosphate (LFMP) from a scanning electron microscope according to an embodiment of this application;
FIG. 4 is a schematic diagram of a battery cell according to an embodiment of this application;
FIG. 5 is a schematic exploded structural view of a battery cell according to an embodiment of this application;
FIG. 6 is a schematic exploded structural view of a battery according to an embodiment of this application; and
FIG. 7 is a schematic diagram of an electric device according to an embodiment of this application.

In the accompanying drawings, the accompanying drawings are not drawn in an actual proportion.

Reference numerals in the specific implementations are as follows:
Battery 10, box 11, battery cell 20, housing 21, electrode assembly 22, and cover plate 23.

### DETAILED DESCRIPTION

Hereinafter, implementations of a battery cell, a battery, and an electric device of this application are specifically disclosed in the detailed descriptions with reference to the accompanying drawings as appropriate. However, there may be situations where unnecessary detailed explanations are omitted. For example, there are situations where detailed explanations of well-known matters and repeated explanations of actually the same structure are omitted. Thus, the following descriptions do not become unnecessarily lengthy, which facilitates understanding by those skilled in the art. In addition, the accompanying drawings and subsequent descriptions are provided for those skilled in the art to fully understand this application, and are not intended to limit the subject matter recited in the claims.

In the descriptions of this application, it should be noted that, unless otherwise stated, "a plurality of" means two or more; and the orientations or positional relationships indicated by the terms "upper", "lower", "left", "right", "inside", "outside", and the like are merely intended to help the descriptions of this application and simplify the descriptions other than indicate or imply that the apparatuses or components must have specific orientations, or be constructed and manipulated with specific orientations, and therefore shall not be understood as limitations on this application. Moreover, the terms "first", "second", "third" and the like are used for descriptive purposes only and are not to be construed as indicating or implying relative importance.

The "ranges" disclosed in this application are defined in the form of lower and upper limits, with a given range being defined by the selection of a lower limit and an upper limit defining the boundaries of the particular range. The range defined in this way may include or exclude end values, and may be arbitrarily combined, that is, any lower limit can be combined with any upper limit to form a range. For example, if ranges of 60 to 120 and 80 to 110 are listed for a particular parameter, it is to be understood that ranges of 60 to 110 and 80 to 120 are also expected. In addition, if the minimum range values 1 and 2 are listed, and if the maximum range values 3, 4, and 5 are listed, the following ranges can all be expected: 1 to 3, 1 to 4, 1 to 5, 2 to 3, 2 to 4, and 2 to 5. In this application, unless stated otherwise, the numerical range "a to b" represents an abbreviated representation of any combination of real numbers between a to b, where both a and b are real numbers. For example, the numerical range "0 to 5" means that all real numbers between 0 and 5 are listed herein, and "0 to 5" is merely an abbreviated representation of the combination of these numbers. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all the steps in this application can be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

Unless otherwise specifically stated, "comprising" and "including" mentioned in this application indicate open inclusion or closed inclusion. For example, the "including" and "comprising" may indicate that it is possible to include or comprise other components not listed, and it is also possible to include or comprise the listed components exclusively.

If not specifically stated, in this application, the term "or" is inclusive. For example, the phrase "A or B" means "A, B, or both A and B" More specifically, any one of the following conditions satisfies the condition "A or B": A is true (or present) and B is false (or not present); A is false (or not present) and B is true (or present); or both A and B are true (or present).

Unless otherwise specified, all the embodiments and optional embodiments of this application can be combined with each other form new technical solutions.

Unless otherwise specified, all technical features and optional technical features of this application can be combined with each other to form new technical solutions.

Lithium-ion batteries are widely used in fields such as mobile phones, electric vehicles, and power storage stations due to features such as a high energy density, a high voltage, and a long life. A positive electrode plate serves as a component of a battery, and performance of the positive electrode plate is crucial to performance of the battery.

The positive electrode plate includes a positive electrode current collector and a positive electrode material coated on a surface of the positive electrode current collector. The positive electrode material may include a positive electrode active material, a conductive agent, a binder, and a solvent configured to dissolve the foregoing materials. The positive electrode active material is electrically connected to the conductive agent by using the binder, thereby implementing electrical connections between the positive electrode active materials and between the positive electrode active materials and the positive electrode current collector.

However, due to properties of some positive electrode active materials, such as a layered transition metal oxide, a volume of the positive electrode active material shrinks during use of the battery, and the positive electrode active material tears the binder. As a result, the binder is separated from the positive electrode active material or the conductive agent, resulting in a failure of an electrical connection between the positive electrode active material and the conductive agent. Consequently, the electrical connections between the positive electrode active materials and between the positive electrode active materials and the positive electrode current collector fail, and use performance of the battery is affected.

In view of this, an embodiment of this application provides a positive electrode plate, including an active material layer. The active material layer includes a first active material, a conductive agent, and a binder. Specifically, the first active material includes a layered transition metal oxide, and the binder includes a flexible binder, configured to bind the first active material and the conductive agent. In the technical solution of this embodiment of this application, the flexible binder is provided, configured to bind the layered transition metal oxide and the conductive agent. The flexible binder has good stretchability. When the volume of the layered transition metal oxide shrinks and the layered transition metal oxide tears the binder, the binder deforms, to adapt to the volume shrinking of the layered transition metal oxide and maintain an electrical connection with the layered transition metal oxide, so that an impact of a failure of the electrical connection between the positive electrode active material and the conductive agent on performance of the battery is reduced. Therefore, the technical solution of this embodiment of this application can improve the performance of the battery.

Hereinafter, a plurality of embodiments of this application are specifically introduced.

### [Positive electrode plate]

The positive electrode plate includes a positive electrode current collector and an active material layer arranged on at least one surface of the positive electrode current collector. The positive electrode plate provided in the embodiments of this application includes an active material layer, where the active material layer includes a first active material, a conductive agent, and a binder. Specifically, the first active material includes a layered transition metal oxide, and the binder includes a flexible binder, configured to bind the first active material and the conductive agent.

The layered transition metal oxide serving as a positive electrode active material of a battery is an oxide having a multi-layer (generally two-dimensional) structure, is obtained based on oxidation-reduction reaction between transition metal cations and lattice oxygen anions, and has high energy and a high power density.

The flexible binder binds the positive electrode active material and the conductive agent in the positive electrode plate, to implement electrical connections between the positive electrode active materials and between the positive electrode active materials and the positive electrode current collector. The flexible binder has good stretchability and bonding strength. Under an external force, the flexible binder can deform to adapt to the external force, so that the bonding strength is maintained.

The conductive agent has an electrical conductivity property, and collects a micro current between positive electrode active materials in the positive electrode plate, to reduce a contact resistance of an electrode and increase a movement rate of electrons, and can also effectively increase a migration rate of lithium ions in an electrode material, thereby improving charging and discharging efficiency of the electrode.

The positive electrode plate provided in the embodiments of this application includes the active material layer, where the active material layer includes the first active material, the conductive agent, and the binder. Specifically, the first active material includes the layered transition metal oxide, and the binder includes the flexible binder, configured to bind the first active material and the conductive agent. When the layered transition metal oxide serves as a positive electrode active material, during use of a battery, a volume of the layered transition metal oxide greatly shrinks, resulting in an enlarged gap between the layered transition metal oxide and the binder. The layered transition metal oxide tears the binder. As a result, the binder is separated from the first active material and/or the conductive agent, and an electrical connection between the first active material and the conductive agent is lost because there is no binding of the binder. In the technical solution of this embodiment of this application, the flexible binder is provided, configured to bind the layered transition metal oxide and the conductive agent. The flexible binder has good stretchability. When the volume of the layered transition metal oxide shrinks and the layered transition metal oxide tears the binder, the flexible binder deforms, to adapt to the volume shrinking of the layered transition metal oxide and maintain an electrical connection between the layered transition metal oxide and the conductive agent, so that an impact of a failure of the electrical connection between the first active material and the conductive agent on performance of the battery is reduced. Therefore, the technical solution of this embodiment of this application can improve the performance of the battery.

Optionally, in some embodiments, the flexible binder includes at least one of a polyethylene-based binder, a polyisocyanate-based binder, and a polypropylene-based binder.

Specifically, the flexible binder may include at least one of polyvinylpyrrolidone-polyethyleneimine (PVP-PEI) and poly(N-methacryloyl-3,4-dihydroxy-L-phenylalanine) (PMDOPA).

A -NH₂ group and a C=O group in PVP-PEI form a dynamic hydrogen bond network, so that PVP-PEI has a good self-healing property and a certain degree of stretchability. The PMDOPA includes abundant O-diphenol functional groups, so that PMDOPA has a good binding property and better flexibility. During use of the battery, the volume of the layered transition metal oxide shrinks, and the layered transition metal oxide tears the binder. However, due to the good self-healing property and the certain degree of stretchability of PVP-PEI and the good binding property and the better flexibility of PMDOPA, a problem of a poor connection between the first active material and the conductive agent that is caused by the shrinking of the volume of the layered transition metal oxide can be avoided.

Optionally, in some embodiments, the first active material includes at least one of a ternary material and a quaternary material.

Optionally, the first active material includes Li₁₊ₐNiₓCo_{y}M_{1-x-y}O_{2+b}. M includes at least one of Mn, Zr, Al, B, Ta, Mo, W, Nb, Sb, and La, 0.5≤x<1.0, 0≤y<0.5, x+y<1, -0.5≤a≤0.5, and -0.02≤b<0.02.

Optionally, in some embodiments, the first active material includes lithium nickel cobalt manganate.

It should be understood that the lithium nickel cobalt manganate is merely example descriptions of a substance used as the first active material in this embodiment of this application, and does not constitute a limitation on the first active material of this application. For example, the first active material may further include lithium nickel cobalt aluminate, lithium nickel cobalt manganese aluminate, or the like.

The lithium nickel cobalt manganate has advantages such as good cycle performance (having excellent cycle stability at both a normal temperature and a high temperature), a high energy density, a high voltage plateau, good thermal stability, a long cycle life, an ideal crystal structure, small self-discharging, and no memory effect. Therefore, when the lithium nickel cobalt manganate is used as the positive electrode active material, the performance of the battery can be improved.

Optionally, in some embodiments, the conductive agent includes a linear conductive agent, and the linear conductive agent includes at least one of carbon nanotubes and graphene.

The linear conductive agent has good electrical conductivity performance, can reduce a contact resistance of an electrode and increase a movement rate of electrons, and can also effectively increase a migration rate of lithium ions in an electrode material and improve electronic conductivity of an electrode plate, thereby improving charging and discharging efficiency of the electrode. For example, in the carbon nanotubes and the graphene, SP² hybridization is performed on carbon atoms, so that the carbon nanotubes and the graphene have a high modulus and high strength. In addition, the carbon nanotubes have good flexibility, stretchability, and electrical conductivity performance, and the graphene has high tensile strength, good ductility, and electrical conductivity performance. As the conductive agent, the carbon nanotubes and/or the graphene can greatly improve electrical conductivity performance of the battery.

Optionally, in some embodiments, the positive electrode material further includes a second active material. The second active material includes an olivine-structure phosphate material, and optionally, the second active material includes Li_{1+c}Fe_{d}M'₁₋ₐP₁₋ₘO₄₋ₙ. M' includes at least one of Mn, Al, Cu, Mg, Zn, Ni, Ti, V, Zr, Co, Ga, Sn, Sb, Nb, and Ge, -0.2≤c≤0.2, 0.3≤d≤1, 0≤m≤0.1, and 0≤n≤0.1.

Optionally, in some embodiments, the second active material includes at least one of lithium iron phosphate and lithium manganese iron phosphate.

It should be understood that the lithium iron phosphate and lithium manganese iron phosphate are merely example descriptions of a substance used as the second active material in this embodiment of this application, and does not constitute a limitation to the second active material of this application. For example, the second active material may further include lithium nickel oxide, lithium cobalt oxide, or the like.

The olivine structure is a crystal structure of a material. The material having the olivine structure has high stability. When the olivine structure is used in a battery cell, a risk that the battery cell catches fire or explodes under a condition such as a high temperature can be reduced, to help improve reliability of the battery cell. The positive electrode plate is made of a composite active material, and the layered transition metal oxide and the olivine-structure phosphate material are mixed, so that the battery has advantages of both the layered transition metal oxide and the olivine-structure phosphate material, thereby further improving the performance of the battery. For example, the second active material includes lithium iron phosphate. The lithium iron phosphate has advantages such as a high energy density, high safety, and a long cycle life, and can improve cycle performance and an energy density of the battery.

Optionally, in some embodiments, a mass ratio of the first active material to the second active material ranges from 0.1:1 to 9:1.

Specifically, the mass ratio of the first active material to the second active material may be 0.1:1, 0.2:1, 0.3:1, 0.4:1, 0.5:1, 0.6:1, 0.7:1, 0.8:1, 0.9:1, 1:1, 2:1, 3:1, 4:1, 5:1, 6:1, 7:1, 8:1, or 9:1, or a value of the mass ratio is within a range obtained by combining any two of the foregoing values of the mass ratio.

The mass ratio of the first active material to the second active material is set within an appropriate range, so that the battery has advantages of both the layered transition metal oxide and the phosphate material, to improve the performance of the battery.

Optionally, in some embodiments, based on a total weight of the active material layer, a ratio of a weight of the conductive agent to the weight of the active material layer ranges from 0.4% to 3%.

Specifically, the ratio of the weight of the conductive agent to the weight of the active material layer may be 0.4%, 0.5%, 0.6%, 0.7%, 0.8%, 0.9%, 1%, 2%, or 3%, or a value of the ratio is within a range obtained by combining any two of the foregoing values.

When the ratio of the conductive agent in the active material layer is excessively low, a quantity of electron conduction channels is small, and an effective conduction effect cannot be achieved, which is not conductive to charging and discharging with a large current. When the ratio of the conductive agent in the active material layer is excessively high, a ratio of the active material in the active material layer is reduced, resulting in a decrease in a capacity of the battery. When a content of the conductive agent in the active material layer is proper, the battery can have a high discharging capacity and good cycle performance.

Optionally, the positive electrode plate further includes the positive electrode current collector. Optionally, the positive electrode current collector has two surfaces opposite to each other in a thickness direction of the positive electrode current collector, and the active material layer is disposed on either or both of the two opposite surfaces of the positive electrode current collector.

In some implementations, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

### [Preparation method for a positive electrode plate]

The preparation method for a positive electrode plate includes: providing an active material layer.

The active material layer includes a first active material, a conductive agent, and a binder. The first active material includes a layered transition metal oxide, and the binder includes a flexible binder, configured to bind the first active material and the conductive agent.

In some implementations, the positive electrode plate may be prepared as follows: dispersing the above components for preparing the positive electrode plate, for example, the first active material, the conductive agent, the binder, and any other components, in a solvent (for example, N-methylpyrrolidone) to form positive electrode slurry; and coating the positive electrode slurry on a positive electrode current collector, followed by processes such as drying and cold pressing, to obtain the positive electrode plate.

### [Negative electrode plate]

The negative electrode plate includes a negative electrode current collector and a negative electrode film layer disposed on at least one surface of the negative electrode current collector. The negative electrode film layer includes a negative electrode active material.

For example, the negative electrode current collector has two surfaces opposite to each other in a thickness direction of the negative electrode current collector, and the negative electrode film layer is disposed on either or both of the two opposite surfaces of the negative electrode current collector.

In some implementations, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, or the like) on the polymer material substrate (for example, a substrate of polypropylene(PP), polyethylene terephthalate (PET), polybutylene terephthalate (PBT), polystyrene (PS), or polyethylene (PE)).

In some implementations, the negative electrode active material may be a negative electrode active material used for batteries well-known in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, a silicon oxide, a silicon-carbon compound, a silicon-nitrogen compound, and silicon alloy. The tin-based material may be at least one selected from elemental tin, a tin oxide, and tin alloy. However, this application is not limited to such materials, and may alternatively use other conventional materials that can be used as negative electrode active materials for batteries. Only one or a combination of two or more of these negative electrode active materials may be used.

In some implementations, the negative electrode film layer optionally includes a binder. The binder may be at least one selected from styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some implementations, the negative electrode film layer optionally includes a conductive agent. The conductive agent may be at least one selected from superconducting carbon, acetylene black, carbon black, Ketjen black, carbon dots, carbon nanotubes, graphene, and carbon nanofibers.

In some implementations, the negative electrode film layer optionally includes another additive such as a thickener (for example, sodium carboxymethyl cellulose (CMC-Na)).

In some implementations, the negative electrode plate may be prepared as follows: dispersing the above components for preparing the negative electrode plate, for example, the negative electrode active material, the conductive agent, the binder, and any other components, in a solvent (for example, deionized water) to form negative electrode slurry; and coating the negative electrode slurry on a negative electrode current collector, followed by processes such as drying and cold pressing, to obtain the negative electrode plate.

### [Electrolyte]

The electrolyte transmits ions between a positive electrode plate and a negative electrode plate. A type of the electrolyte is not specifically limited in this application, and may be selected according to requirements. For example, the electrolyte may be liquid, gelled, or all solid.

In some implementations, the electrolyte uses an electrolyte solution. The electrolyte solution includes an electrolyte salt and a solvent.

In some implementations, the electrolyte salt may be selected from at least one of lithium hexafluorophosphate, lithium tetrafluoroborate, lithium perchlorate, lithium hexafluoroborate, lithium bis(fluorosulfonyl)imide, lithium bis-trifluoromethanesulfonimide, lithium trifluoromethanesulfonate, lithium difluorophosphate, lithium difluorooxalatoborate, lithium bisoxalatoborate, lithium difluorobisoxalate phosphate, and lithium tetrafluoro oxalate phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some implementations, the electrolyte solution optionally includes an additive. For example, the additive may include a negative electrode film forming additive, a positive electrode film forming additive, and may further include an additive that can improve particular battery performance, for example, an additive that improves battery overcharging performance or an additive that improves high or low temperature performance of the battery.

### [Separator]

In some implementations, a battery cell further includes a separator. A type of the separator is not particularly limited in this application, and any well-known separator with a porous structure having good chemical stability and mechanical stability may be selected.

In some implementations, a material of the separator may be at least one selected from glass fiber, non-woven fabric, polyethylene, polypropylene, or polyvinylidene fluoride. The separator may be a single-layer film or a multilayer composite film without special limitations. When the separator is a multilayer composite film, materials of the layers may be the same or different without special limitations.

In some implementations, a positive electrode plate, a negative electrode plate, and the separator can be made into an electrode assembly through a winding process or a lamination process.

The following describes a battery cell, a battery, and an electric device in this application with reference to the accompanying drawings.

An embodiment of this application further provides a battery cell. Generally, the battery cell includes a positive electrode plate, a negative electrode plate, an electrolyte, and a separator. During charging and discharging of a battery, active ions are intercalated and deintercalated back and forth between the positive electrode plate and the negative electrode plate. The electrolyte transmits ions between the positive electrode plate and the negative electrode plate. The separator is disposed between the positive electrode plate and the negative electrode plate, and is mainly configured to prevent a short circuit between positive and negative electrodes while allowing ions to pass through.

It should be understood that the "intercalation" process described in this application refers to a process in which active ions are intercalated into a positive electrode active material or a negative electrode active material due to electrochemical reaction, and the "deintercalation" and "deintercalation" process described in this application refers to a process in which active ions are deintercalated from the positive electrode active material or the negative electrode active material due to electrochemical reaction.

In some embodiments, the battery cell may include an outer packaging. The outer packaging may be used for packaging the foregoing electrode assembly and electrolyte.

In some embodiments, the outer packaging of the battery cell may be a hard shell, such as a hard plastic case, an aluminum shell, or a steel shell. Alternatively, the outer packaging of the battery cell may be a soft package such as a pouch-type soft package. A material of the soft package may be plastic, and examples of the plastic may include polypropylene, polybutylene terephthalate, polybutylene succinate, and the like.

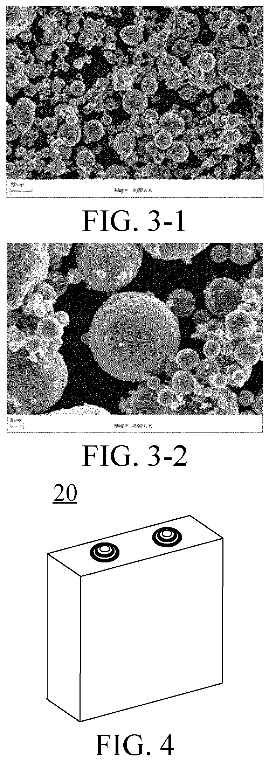

A shape of the battery cell is not particularly limited in this application, and may be cylindrical, prismatic, or any other shape. FIG. 4 shows a battery cell 20 of a square structure as an example.

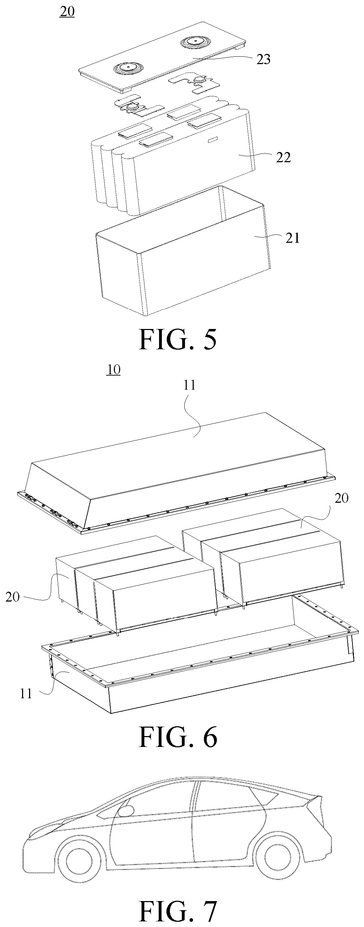

In some implementations, referring to FIG. 5, the outer packaging may include a housing 21 and a cover plate 23. The housing 21 may include a bottom plate and a side plate connected to the bottom plate, and the bottom plate and the side plate enclose an accommodating cavity. The housing 21 has an opening in communication with the accommodating cavity, and the cover plate 23 may cover the opening to close the accommodating cavity. An electrode assembly 22 may be formed by a positive electrode plate, a negative electrode plate, and a separator through a winding process or a laminating process. The electrode assembly 22 is enclosed in the accommodating cavity. An electrolyte solution infiltrates into the electrode assembly 22. A quantity of electrode assemblies 22 included in the battery cell 20 may be one or more, and may be selected by a person skilled in the art according to actual requirements.

In some implementations, a battery 10 may include a plurality of battery cells 20. For example, FIG. 6 is a schematic structural diagram of a battery 10 according to an embodiment of this application. The battery 10 may include a plurality of battery cells 20. The battery 10 may further include a box 11. The box 11 has a hollow structure inside, and the plurality of battery cells 20 are accommodated in the box 11. For example, the plurality of battery cells 20 are connected in series, in parallel, or in series-parallel, and are then placed in the box 11.

Optionally, the battery 10 may further include other structures, which are not described one by one in detail herein. For example, the battery 10 may further include a bus component. The bus component is configured to implement electrical connection between the plurality of battery cells 20, such as parallel connection, series connection, or series-parallel connection. Specifically, the bus component may implement electrical connection between the battery cells 20 by connecting electrode terminals of the battery cells 20. Further, the bus component may be fixed to the electrode terminals of the battery cells 20 by welding. Electric energy of the plurality of battery cells 20 may be further led out through an electrically conductive mechanism passing through the box 11. Optionally, the electrically conductive mechanism may be part of the bus component.

According to different power requirements, the number of battery cells 20 can be set to any value. The plurality of battery cells 20 may be connected in series, in parallel, or in series-parallel to achieve large capacity or power. Since the number of battery cells 20 included in each battery 10 may be large, in order to facilitate mounting, the battery cells 20 may be arranged in groups, and each group of battery cells 20 constitutes a battery module. The number of battery cells 20 included in the battery module is not limited, and can be set according to requirements. The battery may include a plurality of battery modules, and the battery modules may be connected in series, in parallel, or in series-parallel.

In addition, this application further provides an electric device. The electric device includes at least one of the battery cell, the battery module, or the battery provided in this application. The battery cell, the battery module, or the battery may be used as a power source of the electric device, or may be used as an energy storage unit of the electric device. The electric device may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

The battery cell, the battery module, or the battery may be selected according to use requirements of the electric device.

FIG. 7 shows an electric device as an example. The electric device is a pure electric vehicle, a hybrid electric vehicle, or a plug-in hybrid electric vehicle. To meet requirements of the electric device for high power and a high energy density of a battery cell, a battery or a battery module may be used.

For another example, the apparatus may be a mobile phone, a tablet computer, or a notebook computer. The apparatus usually needs to be light and thin, and the battery cell may be used as a power source.

### [Examples]

The examples of this application are described below. The examples described below are exemplary and are only intended to explain this application, and cannot be understood as limitations on this application. When specific technologies or conditions are not indicated in the examples, the examples are carried out according to technologies or conditions described in the literature in the art or according to the product specifications. The used reagents or instruments without manufacturer indicated are all conventional products that may be purchased in the market.

### (1) Preparation of a positive electrode plate

Positive electrode plate 1: Lithium nickel cobalt manganate (NCM622), conductive agent carbon nanotubes (CNT), and a flexible chain binder polyvinylpyrrolidone-polyethyleneimine (PVP-PEI) were dissolved in a solvent N-methylpyrrolidone (NMP) according to a mass ratio of 96:2:2, and were mixed uniformly to prepare a positive electrode material 1. A mass ratio of a positive electrode active material (the first active material NCM622) to the solvent was 1:2. A volume average particle size D50 of the first active material NCM622 was 3.5 µm.

The positive electrode material 1 was coated on an aluminum foil, and was dried at 100°C. An NCM coating was formed on the aluminum foil, where a thickness of the coating was 240 µm.

A coated electrode plate was cold pressed at a pressure of 40T, where a compaction density of the electrode plate was 2.8 g/cm³, and stripping was performed to obtain the positive electrode plate 1.

Positive electrode plate 2: The positive electrode plate 2 differed from the positive electrode plate 1 in that a positive electrode active material in the positive electrode plate 2 includes a first active material and a second active material, which are respectively NCM622 and lithium iron phosphate (LFP), where a weight ratio of NCM622, LFP, CNT, and PVP-PEI was 48:48:2:2, and the positive electrode plate 2 was prepared. A volume average particle size D50 of the second active material LFP was 9.5 µm.

Positive electrode plate 3: The positive electrode plate 3 differed from the positive electrode plate 2 in that a weight ratio of NCM622, LFP, CNT, and PVP-PEI in the positive electrode plate 3 was 19.2:76.8:2:2, and the positive electrode plate 3 was prepared.

Positive electrode plate 4: The positive electrode plate 4 differed from the positive electrode plate 2 in that a weight ratio of NCM622, LFP, CNT, and PVP-PEI in the positive electrode plate 4 was 76.8:19.2:2:2, and the positive electrode plate 4 was prepared.

Positive electrode plate 5: The positive electrode plate 5 differed from the positive electrode plate 2 in that a conductive agent in the positive electrode plate 5 was CNT and conductive carbon black (Super-P), where a weight ratio of CNT to Super-P was 1:1, and the positive electrode plate 5 was prepared.

Positive electrode plate 6: The positive electrode plate 6 differed from the positive electrode plate 2 in that a weight ratio of NCM622, LFP, CNT, and PVP-PEI in the positive electrode plate 6 was 47.5:47.5:3:2, and the positive electrode plate 6 was prepared.

Positive electrode plate 7: The positive electrode plate 7 differed from the positive electrode plate 2 in that a weight ratio of NCM622, LFP, CNT, and PVP-PEI in the positive electrode plate 7 was 48.5:48.5:1:2, and the positive electrode plate 7 was prepared.

Positive electrode plate 8: The positive electrode plate 8 differed from the positive electrode plate 2 in that a binder in the positive electrode plate 8 was PVP-PEI and PVDF, where a weight ratio of PVP-PEI to PVDF was 1:1, and the positive electrode plate 8 was prepared.

Positive electrode plate 9: The positive electrode plate 9 differed from the positive electrode plate 2 in that a weight ratio of NCM622, LFP, CNT, and PVP-PEI in the positive electrode plate 9 was 48.95:48.95:2:2, and the positive electrode plate 9 was prepared.

Positive electrode plate 10: The positive electrode plate 10 differed from the positive electrode plate 2 in that a weight ratio of NCM622, LFP, CNT, and PVP-PEI in a positive electrode material 10 was 9:87:2:2, and the positive electrode plate 10 was prepared.

Positive electrode plate 11: The positive electrode plate 11 differed from the positive electrode plate 2 in that a weight ratio of NCM622, LFP, CNT, and PVP-PEI in a positive electrode material 11 was 86.4:9.6:2:2, and the positive electrode plate 11 was prepared.

Positive electrode plate 12: The positive electrode plate 12 differed from the positive electrode plate 2 in that a second active material in a positive electrode material 12 was lithium manganese iron phosphate (LMFP), and the positive electrode plate 12 was prepared. A volume average particle size D50 of the second active material LMFP was 10 µm.

Positive electrode plate 13: The positive electrode plate 13 differed from the positive electrode plate 2 in that a weight ratio of NCM622, LFP, CNT, and PVP-PEI in a positive electrode material 13 was 47:47:4:2, and the positive electrode plate 13 was prepared.

Positive electrode plate 14: The positive electrode plate 14 differed from the positive electrode plate 2 in that a weight ratio of NCM622, LFP, CNT, and PVP-PEI in a positive electrode material 14 was 90:6:2:2, and the positive electrode plate 14 was prepared.

Positive electrode plate 15: The positive electrode plate 15 differed from the positive electrode plate 2 in that a weight ratio of NCM622, LFP, CNT, and PVP-PEI in a positive electrode material 15 was 6:90:2:2, and the positive electrode plate 15 was prepared.

Positive electrode plate 16: The positive electrode plate 16 differed from the positive electrode plate 2 in that a conductive agent in a positive electrode material 16 was conductive carbon black (Super-P), and the positive electrode plate 16 was prepared.

Positive electrode plate 17: The positive electrode plate 17 differed from the positive electrode plate 1 in that a binder in a positive electrode material 17 was polyvinylidene fluoride (PVDF), and prepare the positive electrode plate 17 was prepared.

Positive electrode plate 18: The positive electrode plate 18 differed from the positive electrode plate 2 in that a binder in a positive electrode material 18 was PVDF, and the positive electrode plate 18 was prepared.

Positive electrode plate 19: The positive electrode plate 19 differed from the positive electrode plate 2 in that a positive electrode active material in a positive electrode material 19 includes only a second active material LFP, where a weight ratio of LFP, CNT, and PVP-PEI was 96:2:2, and the positive electrode plate 19 was prepared.

Positive electrode plate 20: The positive electrode plate 20 differed from the positive electrode plate 2 in that a positive electrode active material in a positive electrode material 20 included only a second active material LMFP, where a weight ratio of LMFP, CNT, and PVP-PEI was 96:2:2, and the positive electrode plate 20 was prepared.

Positive electrode plate 21: The positive electrode plate 21 differed from the positive electrode plate 2 in that no conductive agent was added in a positive electrode material 21, where a weight ratio of NCM622, LFP, and PVP-PEI was 49:49:2, and the positive electrode plate 21 was prepared.

### (2) Preparation of a negative electrode plate

An active substance artificial graphite, a conductive agent acetylene black, a binder styrene-butadiene rubber (SBR), and a thickener sodium carboxymethyl cellulose (CMC) were dissolved in a solvent deionized water according to a weight ratio of 96:1.5:1.5:1, and were uniformly mixed with the solvent deionized water, to prepare negative electrode slurry. Then, the negative electrode slurry was uniformly coated on a negative electrode current collector copper foil, and drying was performed to prepare a negative electrode film. Then, cold pressing and slitting were performed to obtain the negative electrode plate.

(3) Preparation of an electrolyte solution: In a glove box under an argon atmosphere with a water content less than 10 ppm, a sufficiently dried lithium salt (LiPF₆) was dissolved in a mixed solvent of ethylene carbonate (EC), ethyl methyl carbonate (EMC), and diethyl carbonate (DEC) having a volume ratio of 20:20:60, then an additive vinylene carbonate (VC) was added, and mixing was uniformly performed, to obtain the electrolyte solution. A concentration of the lithium salt was 1 mol/L.

(4) Preparation of a separator: A conventional polypropylene film was used as the separator.

(5) Assembling of a lithium-ion battery: The positive electrode plate, the separator, and the negative electrode plate were laminated in sequence, so that the separator was located between the positive electrode plate and the negative electrode plate to separate the positive electrode plate from the negative electrode plate, and were wound to obtain an electrode assembly; the electrode assembly was placed in a battery housing, and dried, then the electrolyte solution was injected, followed by processes such as formation and standing to obtain the lithium-ion battery.

Example 1: A lithium-ion battery obtained by assembling the positive electrode plate 1, the separator, the negative electrode plate, and the electrolyte solution according to the foregoing method was Example 1.

Example 2: A lithium-ion battery obtained by assembling the positive electrode plate 2, the separator, the negative electrode plate, and the electrolyte solution according to the foregoing method was Example 2.

Example 3: A lithium-ion battery obtained by assembling the positive electrode plate 3, the separator, the negative electrode plate, and the electrolyte solution according to the foregoing method was Example 3.

Example 4: A lithium-ion battery obtained by assembling the positive electrode plate 4, the separator, the negative electrode plate, and the electrolyte solution according to the foregoing method was Example 4.

Example 5: The lithium-ion battery obtained by assembling the positive electrode plate 5, the separator, the negative electrode plate, and the electrolyte solution according to the foregoing method was Example 5.

Example 6: A lithium-ion battery obtained by assembling the positive electrode plate 6, the separator, the negative electrode plate, and the electrolyte solution according to the foregoing method was Example 6.

Example 7: A lithium-ion battery obtained by assembling the positive electrode plate 7, the separator, the negative electrode plate, and the electrolyte solution according to the foregoing method was Example 7.

Example 8: A lithium-ion battery obtained by assembling the positive electrode plate 8, the separator, the negative electrode plate, and the electrolyte solution according to the foregoing method was Example 8.

Example 9: A lithium-ion battery obtained by assembling the positive electrode plate 9, the separator, the negative electrode plate, and the electrolyte solution according to the foregoing method was Example 9.

Example 10: A lithium-ion battery obtained by assembling the positive electrode plate 10, the separator, the negative electrode plate, and the electrolyte solution according to the foregoing method was Example 10.

Example 11: A lithium-ion battery obtained by assembling the positive electrode plate 11, the separator, the negative electrode plate, and the electrolyte solution according to the foregoing method was Example 11.

Example 12: A lithium-ion battery obtained by assembling the positive electrode plate 12, the separator, the negative electrode plate, and the electrolyte solution according to the foregoing method was Example 12.

Example 13: A lithium-ion battery obtained by assembling the positive electrode plate 13, the separator, the negative electrode plate, and the electrolyte solution according to the foregoing method was Example 13.

Example 14: A lithium-ion battery obtained by assembling the positive electrode plate 14, the separator, the negative electrode plate, and the electrolyte solution according to the foregoing method was Example 14.

Example 15: A lithium-ion battery obtained by assembling the positive electrode plate 15, the separator, the negative electrode plate, and the electrolyte solution according to the foregoing method was Example 15.

Example 16: A lithium-ion battery obtained by assembling the positive electrode plate 16, the separator, the negative electrode plate, and the electrolyte solution according to the foregoing method was Example 16.

Comparative example 1: A lithium-ion battery obtained by assembling the positive electrode plate 17, the separator, the negative electrode plate, and the electrolyte solution according to the foregoing method was Comparative example 1.

Comparative example 2: A lithium-ion battery obtained by assembling the positive electrode plate 18, the separator, the negative electrode plate, and the electrolyte solution according to the foregoing method was Comparative example 2.

Comparative example 3: A lithium-ion battery obtained by assembling the positive electrode plate 19, the separator, the negative electrode plate, and the electrolyte solution according to the foregoing method was Comparative example 3.

Comparative example 4: A lithium-ion battery obtained by assembling the positive electrode plate 20, the separator, the negative electrode plate, and the electrolyte solution according to the foregoing method was Comparative example 4.

Comparative example 5: A lithium-ion battery obtained by assembling the positive electrode plate 21, the separator, the negative electrode plate, and the electrolyte solution according to the foregoing method was Comparative example 5.

Details of product parameters of different examples are shown in Table 1.

**Table 1: Product parameters of comparative examples and different examples**

| Serial number | Positive electrode active material | Ratio of the positive electrode active material/% | Conductive agent | Ratio of the conductive agent/% | Binder | Ratio of the binder/% |
|---|---|---|---|---|---|---|
| Example 1 | NCM | 96 | CNT | 2 | PVP-PEI | 2 |
| Example 2 | NCM+LFP | 48+48 | CNT | 2 | PVP-PEI | 2 |
| Example 3 | NCM+LFP | 19.2+76.8 | CNT | 2 | PVP-PEI | 2 |
| Example 4 | NCM+LFP | 76.8+19.2 | CNT | 2 | PVP-PEI | 2 |
| Example 5 | NCM+LFP | 48+48 | CNT+Super-P | 1+1 | PVP-PEI | 2 |
| Example 6 | NCM+LFP | 47.5+47.5 | CNT | 3 | PVP-PEI | 2 |
| Example 7 | NCM+LFP | 48.5+48.5 | CNT | 1 | PVP-PEI | 2 |
| Example 8 | NCM+LFP | 48+48 | CNT | 2 | PVP-PEI+PVDF | 1+1 |
| Example 9 | NCM+LFP | 48.8+48.8 | CNT | 0.4 | PVP-PEI | 2 |
| Example 10 | NCM+LFP | 9+87 | CNT | 2 | PVP-PEI | 2 |
| Example 11 | NCM+LFP | 86.4+9.6 | CNT | 2 | PVP-PEI | 2 |
| Example 12 | NCM+LMFP | 48+48 | CNT | 2 | PVP-PEI | 2 |
| Example 13 | NCM+LFP | 47+47 | CNT | 4 | PVP-PEI | 2 |
| Example 14 | NCM+LFP | 90+6 | CNT | 2 | PVP-PEI | 2 |
| Example 15 | NCM+LFP | 6+90 | CNT | 2 | PVP-PEI | 2 |
| Example 16 | NCM+LFP | 48+48 | Super-P | 2 | PVP-PEI | 2 |
| Comparative example 1 | NCM | 96 | CNT | 2 | PVDF | 2 |
| Comparative example 2 | NCM+LFP | 48+48 | CNT | 2 | PVDF | 2 |
| Comparative example 3 | LFP | 96 | CNT | 2 | PVP-PEI | 2 |
| Comparative example 4 | LMFP | 96 | CNT | 2 | PVP-PEI | 2 |
| Comparative example 5 | NCM+LFP | 49+49 | / | / | PVP-PEI | 2 |

Next, test processes of related parameters are described.

### 1. Test of parameters related to the positive electrode active material

### (1) Test of a volume average particle size D50

Equipment model: MasterSizer 2000 (MasterSizer 2000) laser particle size analyzer, reference standard procedure: GB/T19077-2016/ISO 13320:2009.

Specific test procedure: An appropriate amount of a to-be-tested sample (provided that a concentration of the sample ensures a shading rate from 8% to 12%) was added to 20 ml of deionized water, and sonicated for 5 min (at 53 KHz/120 W) to ensure that the sample was completely dispersed. Then, the sample was measured according to the standard GB/T19077-2016/ISO 13320:2009.

### (2) Test of a morphology of the positive electrode active material

The positive electrode active materials of all the examples and comparative examples were measured by using a scanning electron microscope ZEISS sigma 300, and then tests were performed according to the standard JY/T010-1996, to observe morphologies of the samples. For test results, refer to FIG. 1-1 to FIG. 3-2.

Specifically, FIG. 1-1 and FIG. 1-2 are both pictures of the NCM622 from the scanning electron microscope in the examples of this application. FIG. 1-1 differs from FIG. 1-2 in that observation amplification factors in FIG. 1-1 and FIG. 1-2 are different.

FIG. 2-1 and FIG. 2-2 are both pictures of the LFP from the scanning electron microscope in the examples of this application. FIG. 2-1 differs from FIG. 2-2 in that observation amplification factors in FIG. 2-1 and FIG. 2-2 are different.

FIG. 3-1 and FIG. 3-2 are both pictures of the LFMP from the scanning electron microscope in the examples of this application. FIG. 3-1 differs from FIG. 3-2 in that observation amplification factors in FIG. 3-1 and FIG. 3-2 are different.

It should be noted herein that a shape of the positive electrode material used in this application is not necessarily spherical, or may be irregular, and may be a primary particle or a secondary particle.

### 2. Test of performance of a battery

### (1) Test of a capacity retention rate of the battery

At 45°C, a lithium-ion battery was charged to 4.35 V at a constant current of 1/3 C, then charged at a constant voltage of 4.35 V until the current was 0.05 C, laid aside for 5 min, and then discharged to 2.8 V at 1/3 C. An obtained capacity was denoted as an initial capacity C₀. The foregoing steps were repeated on the same battery, and a discharge capacity Cₙ of the battery after an n^{th} cycle was recorded. The capacity retention rate Pₙ of the battery after each cycle was Cₙ/C₀×100%.

In the test process, the 1^{st} cycle corresponds to n=1, the 2^{nd} cycle corresponds to n=2, ..., and the 200^{th} cycle corresponds to n=200. Data of the capacity retention rates of the batteries corresponding to the examples and the comparative examples in Table 1 was data measured after 200 cycles in the foregoing test condition, that is, a value of P₂₀₀.

### (2) Test of a specific capacitance

At 25°C, a lithium-ion battery was charged to 4.35 V at a constant current of 1/3 C, then charged at a constant voltage of 4.35 V until the current is 0.05 C, laid aside for 5 min, and then discharged to 2.8 V at 1/3 C. An obtained capacity is denoted as an initial capacity C₀. A specific capacity was C₀/(m×97%), where m was a weight of a positive electrode active material coated on the lithium-ion battery.

### (3) Test of rate performance

At 25°C, a battery was charged to 4.35 V at a constant current of 1/3 C, then charged at a constant voltage of 4.35 V until the current is 0.05 C, laid aside for 5 min, and then discharged to 2.8 V at 0.1 C. An average value of capacities obtain in five cycles was denoted as an initial capacity D₀. Then, the battery was charged under the same condition, and separately discharged at 1 C and 2 C. An average value of capacities obtain in five cycles was denoted as an initial capacity D₁₋₂. A capacity retention rate Qₙ each time the battery was discharged at a rate is calculated according to the following formula: Qₙ=(Dₙ/D₀)×100%.

Performance of the batteries prepared in Comparative examples 1 to 5 and Examples 1 to 16 were respectively tested according to the foregoing method. For details of results, refer to Table 2.

**Table 2: Results of testing performance in the comparative examples and different examples**

| Serial number | Specific capacity mAh/g | Capacity retention rate | | |
|---|---|---|---|---|
| | | Capacity retention rate after 200 cycles at 45°C | 1C rate | 2C rate |
| Example 1 | 190 | 93.5% | 90.5% | 81.3% |
| Example 2 | 169 | 95.3% | 87.6% | 77.5% |
| Example 3 | 154 | 96.1% | 83.9% | 73.4% |
| Example 4 | 181 | 93.4% | 89.3% | 79.1% |
| Example 5 | 160 | 93.8% | 86.4% | 76.2% |
| Example 6 | 165 | 95.7% | 87.8% | 77.8% |
| Example 7 | 168 | 94.0% | 85.8% | 75.7% |
| Example 8 | 164 | 93.2% | 84.8% | 74.6% |
| Example 9 | 167 | 90.4% | 84.7% | 75.0% |
| Example 10 | 148 | 96.30% | 83.50% | 73.30% |
| Example 11 | 186 | 93.10% | 89.30% | 79.80% |
| Example 12 | 164 | 95.2% | 87.8% | 77.6% |
| Example 13 | 160 | 91.40% | 85.20% | 75.40% |
| Example 14 | 187 | 91.80% | 88.10% | 79.20% |
| Example 15 | 147 | 96.60% | 82.70% | 71.30% |
| Example 16 | 158 | 90.6% | 83.2% | 73.4% |
| Comparative example 1 | 190 | 90.10% | 85.10% | 75.60% |
| Comparative example 2 | 155 | 90.30% | 82.8% | 71.6% |
| Comparative example 3 | 145 | 97.1% | 82.3% | 70.1% |
| Comparative example 4 | 140 | 95.1% | 83.2% | 71.4% |
| Comparative example 5 | 113 | 58.30% | 56.20% | 43.40% |

It can be learned from results of comparing Comparative examples 1 and 2 with Examples 1 and 2 that, when the flexible binder PVP-PEI is added to the positive electrode material, a volume of the ternary material lithium nickel cobalt manganate shrinks during use of the battery, and the flexible binder adaptively deforms with the shrinking of the volume of lithium nickel cobalt manganate, so that an electrical connection between lithium nickel cobalt manganate and the conductive agent does not fail due to the shrinking of the volume of lithium nickel cobalt manganate, to ensure an electrical connection between the positive electrode active materials. Therefore, performance of the battery is improved.

It can be learned from results of comparing Comparative examples 3 and 4 and Example 1 respectively with Examples 2 to 4 and 10 to 12 that, when a composite active material of lithium nickel cobalt manganate and lithium iron phosphate/lithium manganese iron phosphate is used as the positive electrode active material, advantages of a high energy density of lithium nickel cobalt manganate and a long cycle life of lithium iron phosphate/lithium manganese iron phosphate are achieved, so that the overall performance of the battery is improved.

It can be known from results of comparing Examples 14 and 15 respectively with Examples 2 to 4, 10, and 11 that, when the mass ratio of the first active material lithium nickel cobalt manganate to the second active material lithium iron phosphate is set within an appropriate range, the battery can have advantages of both lithium nickel cobalt manganate and lithium iron phosphate, so that both cycle performance and a capacity of the battery can be improved. Therefore, the overall performance of the battery is improved.

It can be known from a result of comparing Example 16 with Example 2 that, when the linear conductive agent carbon nanotubes are added to the positive electrode material, a contact resistance of an electrode can be reduced and a movement rate of electrons can be increased, a migration rate of lithium ions in an electrode material and electronic conductivity of an electrode plate can also be effectively improved. Therefore, cycle performance and a capacity of the battery are improved.

It can be known from results of comparing Comparative example 5 and Example 13 respectively with Examples 2, 6, 7, and 9 that, the ratio of the weight of the linear conductive agent to the weight of the positive electrode material is neither excessively high nor excessively low. The ratio of the weight of the linear conductive agent to the weight of the positive electrode material is controlled within an appropriate range, so that both cycle performance and a discharge capacity of the battery can be improved. Therefore, the overall performance of the battery is improved.

Although this application is described with reference to the preferred embodiments, various improvements may be made to this application and equivalent parts may be replaced with components thereof without departing from the scope of this application. Especially, as long as there is no structural conflict, the various technical features mentioned in each embodiment can be combined in any way. This application is not limited to the particular embodiments disclosed herein, but includes all technical solutions that fall within the scope of the claims.

## Claims

1. A positive electrode plate, comprising:
an active material layer, wherein the active material layer comprises a first active material, a conductive agent, and a binder, wherein
the first active material comprises a layered transition metal oxide, and the binder comprises a flexible binder, configured to bind the first active material and the conductive agent.

2. The positive electrode plate according to claim 1, wherein the flexible binder comprises at least one of a polyethylene-based binder, a polyisocyanate-based binder, and a polypropylene-based binder.

3. The positive electrode plate according to claim 2, wherein the flexible binder comprises at least one of polyvinylpyrrolidone-polyethyleneimine and poly(N-methacryloyl-3,4-dihydroxy-L-phenylalanine).

4. The positive electrode plate according to any one of claims 1 to 3, wherein the first active material comprises at least one of a ternary material and a quaternary material.

5. The positive electrode plate according to claim 4, wherein the first active material comprises Li₁₊ₐNiₓCo_{y}M_{1-x-y}O_{2+b}, wherein
M comprises at least one of Mn, Zr, Al, B, Ta, Mo, W, Nb, Sb, and La, 0.5≤x<1.0, 0≤y<0.5, x+y<1, -0.5≤a≤0.5, and -0.02≤b<0.02.

6. The positive electrode plate according to claim 5, wherein the first active material comprises lithium nickel cobalt manganate.

7. The positive electrode plate according to any one of claims 1 to 6, wherein the conductive agent comprises a linear conductive agent, and the linear conductive agent comprises at least one of carbon nanotubes and graphene.

8. The positive electrode plate according to any one of claims 1 to 7, wherein the active material layer further comprises a second active material, and the second active material comprises an olivine-structure phosphate material, and optionally, the second active material comprises Li_{1+c}Fe_{d}M'_{1-d}P₁₋ₘO₄₋ₙ, wherein
M' comprises at least one of Mn, Al, Cu, Mg, Zn, Ni, Ti, V, Zr, Co, Ga, Sn, Sb, Nb, and Ge, -0.2≤c≤0.2, 0.3≤d≤1, 0≤m≤0.1, and 0≤n≤0.1.

9. The positive electrode plate according to claim 8, wherein the second active material comprises at least one of lithium iron phosphate and lithium manganese iron phosphate.

10. The positive electrode plate according to claim 8 or 9, wherein a mass ratio of the first active material to the second active material ranges from 0.1:1 to 9:1.

11. The positive electrode plate according to any one of claims 1 to 10, wherein based on a total weight of the active material layer, a ratio of a weight of the conductive agent to the weight of the active material layer ranges from 0.4% to 3%.

12. A preparation method for a positive electrode plate, wherein the method comprises:
providing an active material layer, wherein the active material layer comprises a first active material, a conductive agent, and a binder, wherein
the first active material comprises a layered transition metal oxide, and the binder comprises a flexible binder, configured to bind the first active material and the conductive agent.

13. A battery cell, comprising the positive electrode plate according to any one of claims 1 to 11.

14. A battery, comprising the battery cell according to claim 13.

15. An electric device, comprising the battery according to claim 14.
